# FASCICULE DE BREVET EUROPEEN

(11) **EP 3 599 552 B1**
(45) Date de publication et mention de la délivrance du brevet: **27.01.2021**
(21) Numéro de dépôt: 19188337.0
(22) Date de dépôt: 25.07.2019
(51) Int. Cl.: G06F 8/61, G06F 21/57, G06F 8/41

(54) **PROCÉDÉ ET DISPOSITIF ÉLECTRONIQUE D'INSTALLATION D'APPLICATIONS LOGICIELLES AVIONIQUES SUR UNE PLATEFORME COMPRENANT UN PROCESSEUR MULTICOEURS, PROGRAMME D'ORDINATEUR ET SYSTÈME ÉLECTRONIQUE ASSOCIÉS**
VERFAHREN UND ELEKTRONISCHE VORRICHTUNG ZUM INSTALLIEREN VON SOFTWAREANWENDUNGEN FÜR DIE LUFTFAHRT AUF EINER PLATTFORM, DIE EINEN MEHRKERNPROZESSOR UMFASST, ENTSPRECHENDES COMPUTERPROGRAMM UND ELEKTRONISCHES SYSTEM
ELECTRONIC DEVICE AND METHOD FOR INSTALLING AVIONICS SOFTWARE APPLICATIONS ON A PLATFORM COMPRISING A MULTICORE PROCESSOR, ASSOCIATED COMPUTER PROGRAM AND ELECTRONIC SYSTEM

(30) Priorité: 26.07.2018 FR 1800808
(43) Date de publication de la demande: 29.01.2020
(73) Titulaire: Thales, 92400 Courbevoie (FR)
(72) Inventeur: FUMEY, Marc, 33700 MERIGNAC (FR); BOSSON, Joël, 33700 MERIGNAC (FR)
(74) Mandataire: Lavoix

(56) Documents cités:
- WO-A1-2016/034447
- GIANNOPOULOU GEORGIA ET AL: "DOL-BIP-Critical: a tool chain for rigorous design and implementation of mixed-criticality multi-core systems", DESIGN AUTOMATION FOR EMBEDDED SYSTEMS, AMSTERDAM, NL, vol. 22, no. 1, 2 juin 2018 (2018-06-02), pages 141-181, XP036527621, ISSN: 0929-5585, DOI: 10.1007/S10617-018-9206-3 [extrait le 2018-06-02]
- IGNA GEORGETA ET AL: "Model-based deployment generation for safety-critical avionics systems", 2017 12TH IEEE INTERNATIONAL SYMPOSIUM ON INDUSTRIAL EMBEDDED SYSTEMS (SIES), IEEE, 14 juin 2017 (2017-06-14), pages 1-8, XP033134486, DOI: 10.1109/SIES.2017.7993394

## Description

La présente invention concerne un procédé d'installation d'applications logicielles avioniques sur une plateforme destinée à être embarquée à bord d'un aéronef, la plateforme comprenant un processeur multicœurs ayant une pluralité de cœurs distincts, le procédé d'installation étant mis en œuvre par un dispositif électronique d'installation.

L'invention concerne également un programme d'ordinateur comportant des instructions logicielles qui, lorsqu'elles sont exécutées par un ordinateur, mettent en œuvre un tel procédé.

L'invention concerne également un dispositif électronique d'installation d'applications logicielles avioniques sur une plateforme destinée à être embarquée à bord d'un aéronef, la plateforme comprenant un processeur multicœurs ayant une pluralité de cœurs distincts.

L'invention concerne également un système électronique comprenant une mémoire apte à stocker des applications logicielles avioniques ; une plateforme apte à exécuter chaque application logicielle avionique, la plateforme comprenant un processeur multicœurs ayant une pluralité de cœurs distincts ; et un tel dispositif électronique d'installation d'applications logicielles avioniques sur la plateforme.

L'invention concerne le domaine de la qualification de plateformes embarquées comportant un ou plusieurs processeurs multicœurs, en particulier dans le domaine avionique suivant la norme DO297.

L'utilisation de processeurs multicœurs apporte une difficulté importante pour la qualification des plateformes. En effet, l'exécution simultanée de plusieurs applications logicielles sur un même processeur multicœurs s'accompagne de risques de contentions à cause du partage de ressources communes (bus, mémoire) aux différents cœurs, sans que le comportement du processeur multicœurs puisse être facilement maitrisé.

Le terme « contention » désigne toute situation dans laquelle au moins une activité menée par au moins un cœur d'un processeur multicœurs subit des retards dans son exécution à cause du parallélisme temporel permis par ce processeur multicœurs.

L'origine des contentions est généralement l'usage de ressources communes du processeur ou du système d'exploitation, également appelé OS (de l'anglais *Operating System*) aboutissant à des attentes générant ces retards. L'effet d'une contention est alors un retard sur l'exécution d'une application logicielle hébergée sur un cœur.

Un premier exemple de contention est le bus (appelé souvent « *interconnect* ») reliant les cœurs les uns aux autres qui ne permet pas toujours des transactions simultanées entre cœurs ou entre les cœurs et les périphériques, tels que certaines mémoires cache intégrées ou la mémoire externe.

Un autre exemple de contention est l'usage de modules logiciels communs de l'OS installés sur un des cœurs et appelés par l'ensemble de cœurs, potentiellement simultanément. Des appels simultanés à de tels modules logiciels communs provoquent un arbitrage et une mise en attente de certaines demandes afin de sérialiser les traitements logiciels sur le cœur où le module logiciel commun est installé.

Un autre exemple de contention est une interruption momentanée de tous les cœurs sur évènement particulier sur un des cœurs afin de gérer un statut cohérent entre tous les cœurs.

Lorsque le processeur est en outre un processeur acheté auprès d'un fournisseur, ou processeur COTS (de l'anglais *Commercial Off-The-Shelf),* il est généralement impossible d'avoir accès au détail de conception des organes internes d'un tel processeur multicœurs, et il est donc très difficile, voire impossible de garantir un comportement déterministe du processeur.

Selon un premier type connu d'architecture logicielle pour une plateforme avec processeur multicœurs, également appelée architecture SMP (de l'anglais *Symetrical Multi-Processing*), un système d'exploitation décide à chaque instant quel traitement logiciel est exécuté sur quel cœur.

Selon un deuxième type connu d'architecture logicielle pour une plateforme avec processeur multicœurs, également appelée architecture AMP (de l'anglais *Asymetrical Multi-Processing*), chaque cœur séquence l'exécution d'un ensemble d'applications logicielles, de manière indépendante d'un cœur à l'autre, avec un système d'exploitation par cœur.

Le document « DOL-BIP-Critical: A tool chain for rigorous design and implementation of mixed-criticality multi-core systems » de Giannopoulou et al concerne le séquencement d'applications logicielles sur un processeur multi-cœur avec des ressources partagées qui exigent de limiter des interférences temporelles entre application de criticité différente afin de garantir une isolation temporelle, nécessaire pour une certification, et de permettre une conception incrémentale.

Le document « Model-based Deployment Génération for Safety-Critical Avionics Systems » de lana et al concerne la détermination d'un plan d'installation d'applications logicielles avioniques sur une plateforme comprenant un processeur multi-cœur.

Le document WO 2016/034447-A1 concerne un partitionnement temporel et spatial afin de permettre l'exécution de plusieurs partitions associées à des fonctions avioniques de niveau de criticité différent au sein d'un même calculateur multi-cœur.

Toutefois, de telles architectures ne sont pas suffisamment robustes pour obtenir la qualification de plateformes avec processeurs multicœurs, en particulier dans le domaine avionique suivant la norme DO297.

Le but de l'invention est alors de proposer un procédé et un dispositif d'installation d'applications logicielles avioniques sur une plateforme avec processeur(s) multicœurs, qui permettent de limiter les risques de contention lors de l'exécution desdites applications logicielles et de faciliter alors la qualification de la plateforme.

A cet effet, l'invention a pour objet un procédé d'installation d'applications logicielles avioniques sur une plateforme destinée à être embarquée à bord d'un aéronef, selon la revendication 1.

Avec le procédé d'installation selon l'invention, le respect de la première règle d'installation et/ou de la deuxième règle d'installation pour déterminer le plan d'installation des traitements logiciels permet de limiter les risques de contention.

En effet, avec la première règle d'installation consistant à prédéterminer une liste de combinaisons autorisées de niveaux de criticité pour des applications destinées à être exécutées au cours d'une même zone temporelle, l'installation des applications logicielles avioniques sur la plateforme est optimisée en fonction de probabilités de défaillance, afin de réduire ces risques de contention.

De même, la deuxième règle d'installation consistant à interdire l'installation d'application(s) logicielle(s) critique(s) sur un ou plusieurs cœurs de la pluralité de cœurs du processeur multicœurs permet de créer un sanctuaire pour ces applications critiques en cas de contention extrême.

Le bon fonctionnement au sein du sanctuaire est, par exemple, encore amélioré par la détection de contention(s), et le cas échéant à titre de correctif en réponse cette détection de contention(s), l'arrêt progressif des applications les moins critiques sur le ou les autres cœurs.

Suivant d'autres aspects avantageux de l'invention, le procédé d'installation est selon l'une quelconque des revendications 2 à 7.

L'invention a également pour objet un programme d'ordinateur selon la revendication 8.

L'invention a également pour objet un dispositif électronique d'installation d'applications logicielles avioniques sur une plateforme destinée à être embarquée à bord d'un aéronef, selon la revendication 9.

L'invention a également pour objet un système électronique selon la revendication 10.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

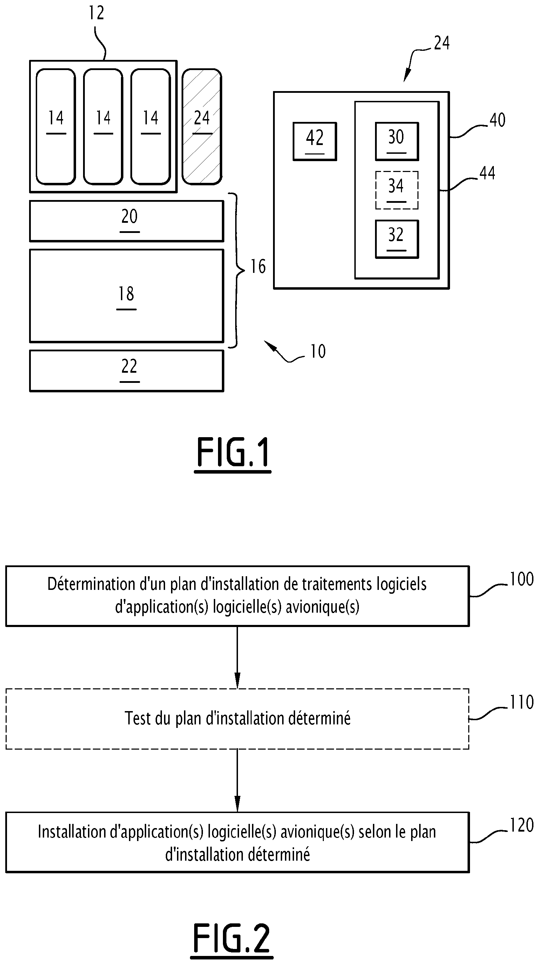

- la figure 1 est une représentation schématique d'un système électronique selon l'invention, comprenant une mémoire apte à stocker des applications logicielles ; une plateforme apte à exécuter chaque application logicielle, la plateforme comportant des ressources, notamment au moins un processeur multicœurs ayant plusieurs cœurs distincts, et hébergeant un système d'exploitation ; et un dispositif électronique d'installation d'applications logicielles avioniques sur la plateforme, chaque application logicielle avionique comportant un ou plusieurs traitements logiciels à exécuter au cours d'une période temporelle prédéfinie ;
- la figure 2 est un organigramme d'un procédé, selon l'invention, d'installation d'applications logicielles avioniques sur la plateforme, le procédé étant mis en œuvre par le dispositif d'installation de la figure 1 ;
- la figure 3 est une représentation schématique d'une installation d'applications logicielles avioniques sur la plateforme, équipée d'un processeur quadricœur ;
- la figure 4 est une représentation schématique illustrant une règle d'installation dépendant d'un temps d'exécution de pire cas (WCET) du traitement logiciel respectif, ledit temps d'exécution de pire cas (WCET) étant augmenté d'une majoration associée à la plateforme, et une autre règle d'installation consistant à interdire l'installation d'application(s) logicielle(s) critique(s) sur un ou plusieurs cœurs de la pluralité de cœurs du processeur multicœurs, chaque application logicielle critique ayant par exemple un niveau de criticité correspondant à un niveau DAL ; et
- la figure 5 est une représentation schématique illustrant un test du plan d'installation déterminé, avec la mise en œuvre simultanée d'une application logicielle avionique sur un cœur et d'applications de test sur les trois autres cœurs du processeur quadricœur de la plateforme de la figure 3.

Sur la figure 1, un système électronique 10, notamment un système électronique avionique destiné à être embarqué à bord d'un aéronef, comprend une mémoire 12 apte à stocker des applications logicielles 14, une plateforme 16 apte à exécuter chaque application logicielle 14, la plateforme 16 comportant des ressources 18 et hébergeant au moins un système d'exploitation 20, la plateforme 16 étant reliée d'autres systèmes électroniques 22, tels que d'autres systèmes électroniques avioniques de l'aéronef.

Le système électronique 10 comprend en outre, selon l'invention, un dispositif électronique 24 d'installation d'applications logicielles avioniques 14 sur la plateforme 16.

Sur la figure 1, par souci de simplification du dessin, la mémoire 12 a été représentée à l'extérieur du rectangle symbolisant les ressources 18, ceci afin de faire apparaitre de manière distincte la couche logicielle correspondant aux applications logicielles 14, ainsi que le cas échéant au dispositif d'installation 24. Néanmoins, l'homme du métier comprendra bien entendu que la mémoire 12 est incluse dans les ressources 18 de la plateforme 16.

L'aéronef est de préférence un avion. En variante, l'aéronef est un hélicoptère, ou encore un drone piloté à distance par un pilote.

Dans l'exemple de la figure 1, la mémoire 12 est apte à stocker trois applications logicielles 14 distinctes, et le dispositif électronique d'installation 24 est alors configuré pour installer ces applications logicielles avioniques 14 sur la plateforme 16.

Chaque application logicielle 14 est destinée à être exécutée par la plateforme 16 et alors conçue pour émettre un ou plusieurs appels à destination du système d'exploitation 20 hébergé par la plateforme 16 et est également configurée pour utiliser des ressources 18 de la plateforme 16.

Lorsque le système électronique 10 est un système électronique avionique embarqué à bord de l'aéronef, chaque application logicielle 14 est également appelée fonction avionique. Les applications logicielles 14 remplissent par exemple différentes fonctions pour l'accomplissement d'un vol, et sont par exemple installées sur différentes plateformes 16 et utilisent les ressources 18 desdites plateformes 16.

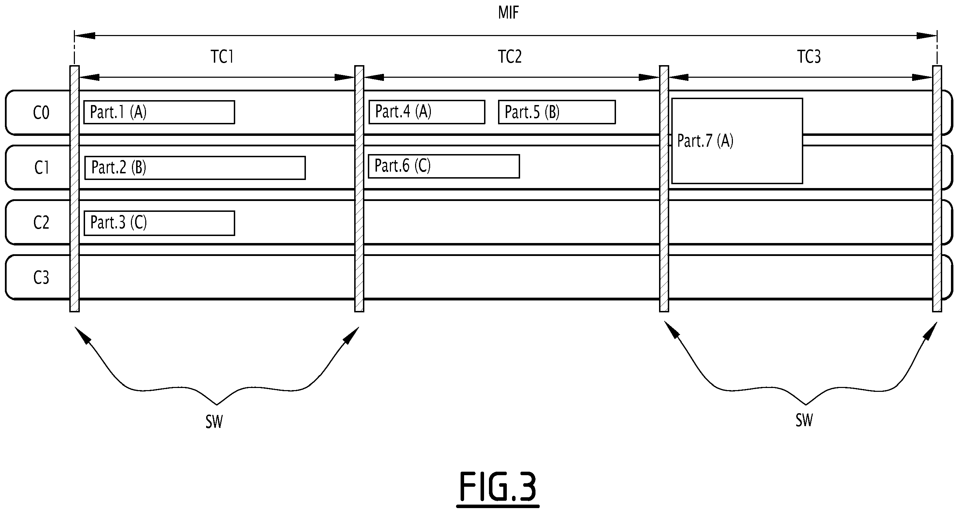

Chaque application logicielle avionique 14 comporte un ou plusieurs traitements logiciels à exécuter au cours d'une période temporelle prédéfinie, par exemple notée MIF (de l'anglais *Mlnor Frame*) à la figure 3, la période temporelle prédéfinie MIF comportant une ou plusieurs zones temporelles successives, également notées TC (de l'anglais *Time Cluster*).

Un traitement logiciel désigne un ensemble d'opérations sur des données de l'application logicielle avionique 14 permettant de réaliser des parties d'une fonction avionique, telles qu'une acquisition ou une émission de données, des calculs mathématiques, des traitements logiques, une manipulation de données.

Chaque traitement logiciel est également appelé processus, ou encore processus logiciel. Un traitement logiciel est par exemple un processus au sens de la norme ARINC 653.

De telles fonctions étant critiques, comme par exemple le système de freinage ou le système de gestion du vol, l'exécution de chaque application logicielle 14 doit être séparée de manière robuste de l'exécution des autres applications logicielles 14, pendant toute leur durée d'exécution, et l'installation des applications logicielles 14 doit alors être effectuée en conséquence par le dispositif électronique d'installation 24.

La plateforme 16 est notamment destinée à être embarquée à bord de l'aéronef. La plateforme 16 est, par exemple, une unité de traitement d'informations formée d'une ou plusieurs mémoires associées à un ou plusieurs processeurs.

L'invention est applicable à différents types d'architectures logicielles, notamment à une architecture dite de multitraitement symétrique, également appelée architecture SMP (de l'anglais *Symetrical Multi-Processing*), ou encore à une architecture dite de multitraitement asymétrique, également appelée architecture AMP (de l'anglais *Asymetrical Multi-Processing*).

Une architecture SMP désigne plus précisément une architecture logicielle où le système d'exploitation 20 décide à chaque instant quel processus est exécuté sur quel cœur de processeur.

Dans le cas de l'architecture SMP, la plateforme 16 comprend par exemple un seul système d'exploitation 20, et une seule partition est active à un instant temporel donné. Pour l'architecture SMP, la plateforme 16 héberge alors un unique système d'exploitation 20 pour tous les cœurs.

Dans le cas de l'architecture SMP, l'installation d'applications logicielles 14 est, par exemple, faite en parallèle sur plusieurs cœurs.

Une architecture AMP désigne plus précisément une architecture logicielle où chaque cœur séquence un ensemble d'applications logicielles de manière indépendante des autres cœurs.

Dans le cas de l'architecture AMP, la plateforme 16 comprend par exemple une pluralité de systèmes d'exploitation 20, en hébergeant un système d'exploitation 20 pour chaque cœur, permettant alors d'activer des partitions différentes à un instant temporel donné.

Dans le cas de l'architecture AMP, l'installation d'applications logicielles 14 est, par exemple, faite de manière séquentielle sur un seul cœur indépendamment des autres cœurs.

Les ressources 18 de la plateforme 16 sont des éléments physiques ou logiques propres à être mis à disposition de la ou des applications logicielles 14.

Les ressources 18 sont, par exemple, réparties en les catégories suivantes : ressources de type traitement de données (en anglais « *processing* »), telles qu'un ou plusieurs processeurs ; les ressources de type mémoire ; les ressources de type entrées et sorties ; ressources spécifiques au réseau avionique, telles que des routeurs de communication d'un réseau ARINC664 ; les ressources de type graphique, c'est-à-dire permettant un affichage de données ; et ressources de type mémoire de masse (en anglais « *mass memory* »).

Le système d'exploitation 20 est, par exemple, un système d'exploitation conforme à la norme ARINC 653, ou un système d'exploitation POSIX, ou encore un hyperviseur, ou encore un middleware. L'homme du métier comprendra alors que le système d'exploitation 20 s'entend au sens large, et est, de manière plus générale, un ensemble d'au moins un logiciel de base, conçu pour offrir des services de différents types à chaque application 14.

En complément facultatif, le dispositif électronique d'installation 24 est configuré pour installer les applications logicielles avioniques 14 sur la plateforme 16 et comprend un module de détermination 30 configuré pour déterminer un plan d'installation des traitements logiciels selon au moins une règle parmi une première règle d'installation et une deuxième règle d'installation, le plan d'installation définissant, pour chaque traitement logiciel, au moins un cœur et au moins une zone temporelle TC associés audit traitement logiciel.

Le dispositif électronique d'installation 24 comprend un module d'installation 32 configuré pour installer les applications logicielles avioniques 14 sur la plateforme 16, selon le plan d'installation déterminé par le module de détermination 30.

En complément facultatif, le dispositif électronique d'installation 24 comprend un module de test 34 configuré pour tester le plan d'installation déterminé par le module de détermination 30, le module de test 34 étant adapté pour mettre en œuvre simultanément une ou plusieurs applications logicielles avioniques et une ou plusieurs applications de test. Chaque application de test est de préférence représentative de contention(s) d'intensité supérieure ou égal à un seuil de contention prédéfini.

Le dispositif d'installation 24 est de préférence distinct de la plateforme 16, et comprend une unité de traitement d'informations 40 formée par exemple d'un processeur 42 associé à une mémoire 44.

En variante, comme représenté sous forme de hachures sur la figure 1, le dispositif d'installation 24 est, par exemple, apte à être, au moins partiellement, de préférence pour le module de détermination 30 et/ou le module d'installation 32, exécuté directement par la plateforme 16 et à utiliser alors ses ressources 18. Le dispositif d'installation 24 est alors de préférence hébergé en outre par le système d'exploitation 20.

Dans l'exemple de la figure 1, que le dispositif d'installation 24 soit distinct de la plateforme 16, ou bien hébergé et exécuté par la plateforme 16, le module de détermination 30, le module d'installation 32, et en complément facultatif le module de test 34, sont réalisés chacun sous forme d'un logiciel, ou d'une brique logicielle, exécutable par un processeur, tel que le processeur 42 lorsque le dispositif d'installation 24 est distinct de la plateforme 16. La mémoire 44 du dispositif d'installation 24 est alors apte à stocker un logiciel de détermination du plan d'installation des traitements logiciels selon au moins une règle parmi la première règle d'installation et la deuxième règle d'installation, et un logiciel d'installation des applications logicielles avioniques 14 sur la plateforme 16. En complément facultatif, la mémoire 44 du dispositif d'installation 24 est apte à stocker un logiciel de test du plan d'installation déterminé par le logiciel de détermination, le logiciel de test étant adapté pour mettre en œuvre simultanément une ou plusieurs applications logicielles avioniques et une ou plusieurs applications de test.

En variante non représentée, le module de détermination 30, le module d'installation 32, et en complément facultatif le module de test 34, sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*).

Lorsque le dispositif d'installation 24 est réalisé sous forme d'un ou plusieurs logiciels, c'est-à-dire en forme d'un programme d'ordinateur, il est en outre apte à être enregistré sur un support, non représenté, lisible par ordinateur. Le support lisible par ordinateur est, par exemple, un médium adapté à mémoriser des instructions électroniques et capable d'être couplé à un bus d'un système informatique. A titre d'exemple, le support lisible est une disquette ou disque souple, (de la dénomination anglaise *Floppy disk*), un disque optique, un CD-ROM, un disque magnéto-optique, une mémoire ROM, une mémoire RAM, tout type de mémoire non volatile (par exemple, EPROM, EEPROM, FLASH, NVRAM) une carte magnétique ou une carte optique. Sur le support lisible est alors mémorisé un programme d'ordinateur comprenant des instructions logicielles.

Le module de détermination 30 est configuré pour déterminer le plan d'installation des traitements logiciels selon au moins une règle parmi la première règle d'installation et la deuxième règle d'installation.

Le module de détermination 30 est de préférence configuré pour déterminer le plan d'installation des traitements logiciels selon les première et deuxième règles d'installation à la fois.

La première règle d'installation consiste à prédéterminer une liste de combinaisons autorisées de niveaux de criticité pour des applications destinées à être exécutées au cours d'une même zone temporelle TC sur la plateforme 16.

Chaque application logicielle avionique 14 a par exemple un niveau de criticité correspondant à un niveau DAL défini selon la norme DO-178 révision B et suivante(s), ou selon la norme ARP4754. Le niveau DAL A est le niveau de criticité le plus élevé, et le niveau DAL D est le niveau de criticité le plus faible, selon l'ordonnancement suivant : DAL A > DAL B> DAL C > DAL D.

Une application logicielle avionique 14 est dite critique lorsque son niveau de criticité est supérieur ou égal à un seuil prédéfini, par exemple au niveau DAL B. Autrement dit, chaque application logicielle critique a un niveau de criticité de préférence égal au niveau DAL A ou au niveau DAL B, les niveaux DAL A et DAL B étant de préférence encore considérés comme les plus critiques.

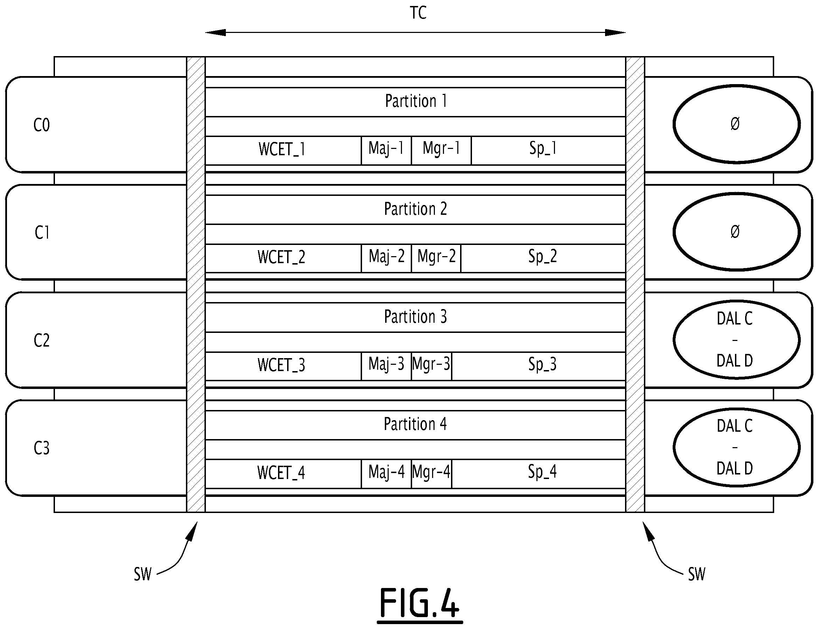

Dans l'exemple de la figure 4, le processeur multicœur est un processeur quadricœur, et la partition 1 est associée à un premier cœur noté C0, la partition 2 étant associée à un deuxième cœur noté C1, la partition 3 est associée à un troisième cœur noté C2 et la partition 4 à un quatrième cœur noté C3.

Dans l'exemple de la figure 4 où le troisième cœur C2 et le quatrième cœur C3 sont réservés aux applications logicielles avioniques 14 ayant un niveau de criticité égal à DAL C ou à DAL D, une liste de combinaisons autorisées selon la première règle d'installation est indiquée à titre d'exemple ci-après.

Dans cet exemple de la figure 4, la plateforme absorbe toute situation anormale venant d'applications pour 2 cœurs. En conséquence, les combinaisons à 3 cœurs sont toutes autorisées si elles respectent la ou les règles d'installation autres que la première règle d'installation.

Des restrictions apparaissent pour des configurations à 4 cœurs ou plus. Dans cet exemple, le principe suivant d'association des applications est mis en œuvre :
- la probabilité que deux applications logicielles ayant un même niveau de criticité donné soient défaillantes est de préférence considérée sensiblement égale à la probabilité qu'une application logicielle ayant un niveau de criticité supérieur d'une unité audit niveau de criticité donné soit défaillante, ce qui est par exemple exprimé par B*B = A, C*C = B ou D*D = C ; et
- l'association de deux applications ayant un niveau de criticité différent est équivalent à une application logicielle ayant un niveau de criticité supérieur d'une unité à l'application de plus basse criticité, ce qui est par exemple exprimé par D*C = C, ou D*B = C,
où chaque lettre A, B, C et D désigne respectivement le niveau de criticité DAL A, DAL B, DAL C et DAL D de l'application considérée.

Selon la première règle d'installation, pour une application d'un niveau de criticité donné, il faut alors que la combinaison des autres applications soit au pire de même niveau de criticité, ce qui traduit l'élimination du risque que les autres applications soient défaillantes avec une probabilité inacceptable.

Dans cet exemple à 4 cœurs, les combinaisons suivantes sont alors interdites :
**A**/D/D/D car (D*D)*D = C < **A**
**A**/C/D/D car (D*D)*C = B < **A**
**A**/B/D/D car (D*D)*B = B < **A**
**A**/B/C/D car (D*C)*B = B < **A**
**B**/D/D/D car (D*D)*D = C < **B**
où les lettres A, B, C et D désignent respectivement le niveau de criticité DAL A, DAL B, DAL C et DAL D de l'application destinée à être installée sur un cœur respectif, le symbole '/' représentant la séparation entre deux cœurs successifs.

La deuxième règle d'installation consiste à interdire l'installation d'application(s) logicielle(s) critique(s) sur un ou plusieurs cœurs de la pluralité de cœurs du processeur multicœurs.

Dans l'exemple de la figure 4, le troisième cœur C2 et le quatrième cœur C3 sont par exemple réservés aux applications logicielles avioniques 14 ayant un niveau de criticité égal à DAL C ou à DAL D, comme symbolisé par la mention « DAL C - DAL D » à l'intérieur des ellipses pour le troisième cœur C2 et le quatrième cœur C3. Autrement dit, l'installation d'application(s) logicielle(s) critique(s) de niveau de criticité DAL A ou DAL B est, dans cet exemple, interdite sur le troisième cœur C2 et le quatrième cœur C3. Le symbole « Ø » à l'intérieur des ellipses pour le premier cœur C0 et le deuxième cœur C1 indique qu'il n'y a pas de restriction d'installation d'application(s) logicielle(s) critique(s) sur ces cœurs C0, C1.

En complément facultatif encore, le module de détermination 30 est configuré pour déterminer le plan d'installation des traitements logiciels selon en outre une troisième règle d'installation dépendant d'un temps d'exécution de pire cas WCET_i du traitement logiciel respectif, ledit temps d'exécution de pire cas WCET_i étant augmenté d'une majoration Maj-i associée à la plateforme 16.

Dans l'exemple de la figure 4, à chaque partition i, avec i indice entier respectivement égal à 1, 2, 3 et 4, est associé un traitement logiciel respectif, et chaque temps d'exécution de pire cas WCET_i est augmenté d'une majoration Maj-i associée à la plateforme 16.

Cette majoration Maj-i du temps d'exécution de pire cas WCET_i est une marge complémentaire offrant un fonctionnement plus sûr de chaque application logicielle avionique 14.

Le temps d'exécution de pire cas WCET_i est typiquement de l'ordre de quelques ms, par exemple compris entre 2 ms et 50 ms, de préférence compris entre 5 ms et 20 ms.

La majoration Maj-i appliquée représente par exemple entre 5% et 30% du temps d'exécution de pire cas WCET_i associé, de préférence encore entre 10% et 20% dudit temps d'exécution de pire cas WCET_i.

Pour la troisième règle d'installation, la majoration Maj-i du temps d'exécution de pire cas WCET_i dépend par exemple d'un taux de contention maximal prédéfini, associé à la plateforme 16.

Cette majoration Maj-i en fonction du taux de contention maximal résulte par exemple d'une caractérisation de la plateforme vis-à-vis de contentions générées par l'exécution en parallèle de différentes applications logicielles sur plusieurs cœurs du processeur multicœurs.

La majoration Maj-i est de préférence indépendante du niveau de criticité de l'application logicielle avionique 14 correspondant au traitement logiciel auquel la majoration Maj-i est associée.

Comme indiqué précédemment, par contention, on entend une situation dans laquelle au moins un traitement exécuté par au moins un cœur d'un processeur multicœurs subit des retards dans son exécution à cause du parallélisme temporel permis par ce processeur multicœurs.

Par taux de contention maximal, on entend le ratio entre le temps d'exécution d'une application respective subissant des contentions dans la pire situation de contention possible et le temps d'exécution de ladite application en l'absence de contention.

En complément facultatif, le module de détermination 30 est configuré pour déterminer le plan d'installation des traitements logiciels selon en outre une quatrième règle d'installation consistant à prendre en compte une marge temporelle supplémentaire Mrg-i pour chaque application logicielle critique.

Cette quatrième règle d'installation permet justifier d'une meilleure robustesse au regard de contraintes de sécurité pour des applications logicielles critiques ayant un niveau de criticité de préférence égal au niveau DAL A ou au niveau DAL B. La marge temporelle supplémentaire Mrg-i offre alors un fonctionnement encore plus sûr de chaque application logicielle avionique 14 critique en permettant d'absorber des contentions qui auraient échappé à une démarche préalable de caractérisation.

La marge temporelle supplémentaire Mrg-i dépend de préférence d'un niveau de criticité de l'application logicielle avionique 14 à laquelle appartient le traitement considéré. De préférence encore, plus le niveau de criticité de l'application logicielle avionique 14 est élevé, plus la marge temporelle supplémentaire Mrg-i associée est importante.

Au-delà du temps d'exécution de pire cas WCET_i augmenté de la majoration Maj-i et de la marge temporelle supplémentaire Mrg-i, un supplément de temps Sp_i (de l'anglais *Spare)* est, en complément facultatif, alloué à l'application et forme alors une marge temporelle additionnelle, utilisable classiquement par cette application pour ses évolutions.

Dans l'exemple de la figure 4, le niveau de criticité de la partition 1 est DAL A, celui de la partition 2 est DAL B, celui de la partition 3 est DAL C et celui de la partition 4 est DAL D. La marge temporelle supplémentaire Mrg-1 pour la partition 1 est alors de durée supérieure à celle Mrg-2 pour la partition 2, elle-même de durée supérieure à celle Mrg-3 pour la partition 3, elle-même de durée supérieure à celle Mrg-4 pour la partition 4.

En variante, la quatrième règle d'installation consiste à prendre en compte une marge temporelle supplémentaire Mrg-i uniquement pour chaque application logicielle critique. La caractérisation préalable et la majoration Maj-i du temps d'exécution de pire cas WCET_i associée sont alors considérées comme suffisantes en termes de sécurité pour des applications logicielles non-critiques, ayant par exemple un niveau de criticité inférieur ou égal au niveau DAL C. En appliquant cette variante à l'exemple de la figure 4 et en prenant l'exemple où les applications logicielles non-critiques sont celles ayant un niveau de criticité inférieur ou égal au niveau DAL C, la marge temporelle supplémentaire Mrg-3 est alors nulle pour la partition 3 de niveau DAL C, de même que la marge temporelle supplémentaire Mrg-4 pour la partition 4 de niveau DAL D. Autrement dit, aucune marge temporelle supplémentaire Mrg-i n'est alors associée aux partitions 3 et 4.

Le module de détermination 30 est ainsi configuré pour déterminer le plan d'installation des traitements logiciels selon au moins une règle parmi les première, deuxième, troisième et quatrième règles d'installation.

Le module de détermination 30 est de préférence configuré pour déterminer le plan d'installation des traitements logiciels selon plusieurs règles à la fois parmi les première, deuxième, troisième et quatrième règles d'installation. Le module de détermination 30 est de préférence encore configuré pour déterminer le plan d'installation des traitements logiciels selon trois règles à la fois, et de préférence encore selon toutes les règles à la fois, parmi les première, deuxième, troisième et quatrième règles d'installation.

Le module d'installation 32 est alors configuré pour installer les applications logicielles avioniques 14 sur la plateforme 16 et selon le plan d'installation déterminé par le module de détermination 30.

Le module de test 34 est configuré pour tester le plan d'installation déterminé par le module de détermination 30. Le module de test 34 est adapté pour mettre en œuvre simultanément une ou plusieurs applications logicielles avioniques et une ou plusieurs applications de test.

Au moins une application de test est de préférence représentative de contention(s) d'intensité supérieure à un seuil de contention prédéfini.

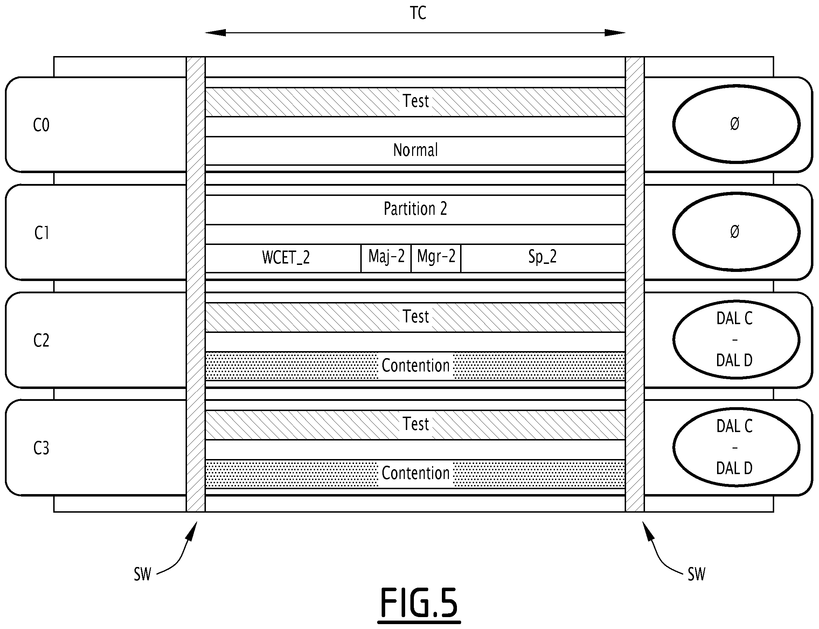

Dans l'exemple de la figure 5, le module de test 34 est configuré pour tester la partition 2 sur le deuxième cœur C1 avec la mise en œuvre d'une application logicielle avionique 14 correspondante sur ce cœur C1 et simultanément d'applications de test sur les trois autres cœurs C0, C2 et C3 du processeur quadricœur de cet exemple. Les applications de test sur les cœurs C2, et respectivement C3, sont en outre représentatives de contention(s) d'intensité supérieure à un seuil de contention prédéfini, comme indiqué par la barre avec la mention « Contention ». L'application de test sur le premier cœur C0 est représentative de contention(s) d'intensité inférieure audit seuil de contention, comme symbolisé par la barre comportant la mention « Normal ».

Le fonctionnement du dispositif d'installation 24 selon l'invention va désormais être expliqué à l'aide de la figure 2 représentant un organigramme du procédé, selon l'invention, d'installation d'applications logicielles 14 sur la plateforme 16, le procédé étant mis en œuvre par le dispositif électronique d'installation 24.

Lors d'une étape 100, le dispositif d'installation 24 détermine, via son module de détermination 30, le plan d'installation des traitements logiciels selon au moins une règle parmi les première, deuxième, troisième et quatrième règles d'installation décrites précédemment, de préférence parmi la première règle d'installation et la deuxième règle d'installation.

Le plan d'installation définit, pour chaque traitement logiciel, au moins un cœur et au moins une zone temporelle TC associés audit traitement logiciel. Dans l'exemple de la figure 3, les partitions sont notées « Part. », suivi d'un indice entier compris entre 1 et 7, et le niveau de criticité DAL associé à chaque application est mentionné entre parenthèses. Dans cet exemple, pour la première zone temporelle TC1, le plan d'installation indique alors l'installation de la partition 1 de niveau de criticité DAL A sur le premier cœur C0, de la partition 2 de niveau de criticité DAL B sur le deuxième cœur C1 et de la partition 3 de niveau de criticité DAL C sur le troisième cœur C2. Pour la deuxième zone temporelle TC2, le plan d'installation prévoit l'installation de deux partitions sur le premier cœur C0, à savoir la partition A de niveau de criticité DAL A et la partition 5 de niveau de criticité DAL B, et de la partition 6 de niveau de criticité DAL C sur le deuxième cœur C1. Enfin, pour la troisième zone temporelle TC3, le plan d'installation indique l'installation de la partition 7 de niveau de criticité DAL A sur le premier cœur C0 et le deuxième cœur C1 à la fois.

Ce plan d'installation de la figure 3 vérifie notamment la deuxième règle d'installation, illustrée précédemment au regard de la figure 4, puisqu'aucune partition de niveau de criticité DAL A ou DAL B n'est prévue sur les troisième cœur C2 et quatrième cœur C3 qui sont réservés ici aux applications logicielles avioniques 14 ayant un niveau de criticité égal à DAL C ou à DAL D. Autrement dit, l'installation d'application(s) logicielle(s) critique(s) de niveau de criticité DAL A ou DAL B est, dans cet exemple, seulement possible sur le premier cœur C0 et/ou sur le deuxième cœur C1.

L'homme du métier observera que chaque zone temporelle TC est délimitée par des séparations SW dans l'exemple des figures 3 à 5. Chaque séparation SW correspond à une commutation synchrone multicœurs effectuée sur l'ensemble des cœurs du processeur multicœurs.

Optionnellement, lors de l'étape suivante 110, le dispositif d'installation 24 détermine, via son module de test 34, le plan d'installation préalablement déterminé par le module de détermination 30.

L'étape de test 110 comporte alors, comme expliqué précédemment en regard de la figure 5, la mise en œuvre simultanée par le module de test 34 d'une ou plusieurs applications logicielles avioniques 14 et d'une ou plusieurs applications de test. Au moins une application de test est de préférence représentative de contention(s) d'intensité supérieure à un seuil de contention prédéfini.

Enfin, lors de l'étape suivante 120, le dispositif d'installation 24 installe, via son module d'installation 32 et sur la plateforme 16, les applications logicielles avioniques 14 selon le plan d'installation, préalablement déterminé par le module de détermination 30, et éventuellement testé par le module de test 34.

Ainsi, le procédé et le dispositif 24 d'installation d'applications logicielles avioniques 14 sur la plateforme 16 avec processeur(s) multicœurs permettent de limiter les risques de contention lors de l'exécution desdites applications logicielles 14 et de faciliter alors la qualification de la plateforme 16.

En effet, la première règle d'installation permet d'optimiser l'installation des applications logicielles avioniques 14 sur la plateforme 16 en fonction de probabilités de défaillance.

La deuxième règle d'installation conduit à limiter l'usage du processeur multicœurs pour les applications les plus critiques en leur interdisant certains cœurs dudit processeur. Typiquement, comme illustré dans les exemples des figures 3 et 4, sur un processeur quadricœur, les applications de niveau de criticité DAL A et DAL B ne peuvent être installées que sur les cœurs 0 et 1. Cette deuxième règle d'installation permet alors de constituer un sanctuaire pour ces applications critiques en cas de contention extrême. Le bon fonctionnement au sein du sanctuaire est alors garanti par la détection de ces contentions et l'arrêt progressif des applications les moins critiques sur les autres cœurs 2 et 3.

Avec la troisième règle d'installation, la majoration Maj-i est une marge résultant de la caractérisation de la plateforme 16 vis-à-vis des contentions et offrant alors un fonctionnement plus sûr de chaque application logicielle avionique 14.

La quatrième règle d'installation prévoyant une marge temporelle supplémentaire Mrg-i pour chaque application logicielle critique permet justifier d'une meilleure robustesse au regard de contraintes de sécurité pour des applications logicielles critiques en permettant l'absorption de contentions qui auraient échappé à une caractérisation préalable.

## Revendications

1. Procédé d'installation d'applications logicielles avioniques (14) sur une plateforme (16) destinée à être embarquée à bord d'un aéronef, la plateforme (16) comprenant un processeur multicœurs ayant une pluralité de cœurs distincts, chaque application logicielle avionique (14) comportant un ou plusieurs traitements logiciels à exécuter au cours d'une période temporelle prédéfinie (MIF), la période temporelle prédéfinie (MIF) comportant une ou plusieurs zones temporelles successives (TC), chaque zone temporelle (TC) étant délimitée par des séparations (SW) correspondant chacune à une commutation synchrone multicœurs effectuée sur l'ensemble des cœurs du processeur multicœurs,
le procédé d'installation étant mis en œuvre par un dispositif électronique d'installation (24) et comprenant l'étape suivante :
- la détermination (100) d'un plan d'installation des traitements logiciels selon au moins une règle parmi une première règle d'installation et une deuxième règle d'installation, le plan d'installation définissant, pour chaque traitement logiciel, au moins un cœur et au moins une zone temporelle (TC) associés audit traitement logiciel,
+ la première règle d'installation consistant à prédéterminer une liste de combinaisons autorisées de niveaux de criticité pour des applications destinées à être exécutées au cours d'une même zone temporelle sur la plateforme (16),
+ la deuxième règle d'installation consistant à interdire l'installation d'application(s) logicielle(s) critique(s) sur un ou plusieurs cœurs de la pluralité de cœurs du processeur multicœurs, chaque application logicielle critique ayant un niveau de criticité supérieur ou égal à un seuil prédéfini, le niveau de criticité correspondant à un niveau DAL défini selon la norme DO-178 révision B, ou selon la norme ARP4754.

2. Procédé selon la revendication 1, dans lequel, pour la première règle d'installation, pour une application d'un niveau de criticité donné, la combinaison des autres applications doit être au pire de même niveau de criticité, et la probabilité que deux applications logicielles ayant un même niveau de criticité donné soient défaillantes est considérée sensiblement égale à la probabilité qu'une application logicielle ayant un niveau de criticité supérieur d'une unité audit niveau de criticité donné soit défaillante.

3. Procédé selon la revendication 1 ou 2, dans lequel, pour la deuxième règle d'installation, chaque application logicielle critique a un niveau de criticité égal au niveau DAL A ou au niveau DAL B,
les niveaux DAL A et DAL B étant de préférence considérés comme les plus critiques.

4. Procédé selon l'une quelconque des revendications précédentes, dans lequel, lors de l'étape de détermination (100), le plan d'installation est déterminé selon les première et deuxième règles d'installation.

5. Procédé selon l'une quelconque des revendications précédentes, dans lequel, lors de l'étape de détermination (100), le plan d'installation est déterminé en outre selon une troisième règle d'installation dépendant d'un temps d'exécution de pire cas (WCET_i) du traitement logiciel respectif, ledit temps d'exécution de pire cas (WCET_i) étant augmenté d'une majoration (Maj-i) associée à la plateforme (16),
pour la troisième règle d'installation, la majoration (Maj-i) du temps d'exécution de pire cas (WCET_i) dépendant de préférence d'un taux de contention maximal prédéfini, associé à la plateforme (16).

6. Procédé selon l'une quelconque des revendications précédentes, dans lequel, lors de l'étape de détermination (100), le plan d'installation est déterminé en outre selon une quatrième règle d'installation consistant à prendre en compte une marge temporelle supplémentaire (Mrg-i) pour chaque application logicielle critique,
chaque application logicielle critique ayant de préférence un niveau de criticité égal au niveau DAL A ou au niveau DAL B,
les niveaux DAL A et DAL B étant de préférence encore considérés comme les plus critiques.

7. Procédé selon l'une quelconque des revendications précédentes, dans lequel le procédé comprend en outre une étape (110) de test du plan d'installation déterminé, effectuée après l'étape de détermination (100), l'étape de test (110) comportant une mise en œuvre simultanée d'une ou plusieurs applications logicielles avioniques (14) et d'une ou plusieurs applications de test,
au moins une application de test étant de préférence représentative de contention(s) d'intensité supérieure ou égale à un seuil de contention prédéfini.

8. Programme d'ordinateur comportant des instructions logicielles qui, lorsqu'elles sont exécutées par un ordinateur, mettent en œuvre un procédé selon l'une quelconque des revendications précédentes.

9. Dispositif électronique (24) d'installation d'applications logicielles avioniques (14) sur une plateforme (16) destinée à être embarquée à bord d'un aéronef, la plateforme (16) comprenant un processeur multicœurs ayant une pluralité de cœurs distincts, chaque application logicielle avionique comportant un ou plusieurs traitements logiciels à exécuter au cours d'une période temporelle prédéfinie (MIF), la période temporelle prédéfinie (MIF) comportant une ou plusieurs zones temporelles successives (TC), chaque zone temporelle (TC) étant délimitée par des séparations (SW) correspondant chacune à une commutation synchrone multicœurs effectuée sur l'ensemble des cœurs du processeur multicœurs,
le dispositif (24) comprenant un module de détermination (30) configuré pour déterminer un plan d'installation des traitements logiciels selon au moins une règle parmi une première règle d'installation et une deuxième règle d'installation, le plan d'installation définissant, pour chaque traitement logiciel, au moins un cœur et au moins une zone temporelle (TC) associés audit traitement logiciel,
+ la première règle d'installation consistant à prédéterminer une liste de combinaisons autorisées de niveaux de criticité pour des applications destinées à être exécutées au cours d'une même zone temporelle sur la plateforme (16),
+ la deuxième règle d'installation consistant à interdire l'installation d'application(s) logicielle(s) critique(s) sur un ou plusieurs cœurs de la pluralité de cœurs du processeur multicœurs, chaque application logicielle critique ayant un niveau de criticité supérieur ou égal à un seuil prédéfini, le niveau de criticité correspondant à un niveau DAL défini selon la norme DO-178 révision B, ou selon la norme ARP4754.

10. Système électronique (10) comprenant :
- une mémoire (12) apte à stocker des applications logicielles (14) ;
- une plateforme (16) apte à exécuter chaque application logicielle (14), la plateforme (16) comprenant un processeur multicœurs ayant une pluralité de cœurs distincts ; et
- un dispositif électronique (24) d'installation des applications logicielles avioniques (14) sur la plateforme (16), le dispositif électronique d'installation (24) étant selon la revendication 9.

## Patentansprüche

1. Verfahren zum Installieren von Avionik-Software-Anwendungen (14) auf einer Plattform (16), welche dazu bestimmt ist, an Bord eines Luftfahrzeugs befördert zu werden, wobei die Plattform (16) einen Mehrkernprozessor mit einer Mehrzahl von separaten Kernen aufweist, wobei jede Avionik-Software-Anwendung (14) einen oder mehrere im Laufe einer vordefinierten Zeitperiode (MIF) auszuführende Softwareverarbeitungsvorgänge aufweist, wobei die vordefinierte Zeitperiode (MIF) einen oder mehrere aufeinanderfolgende Zeitbereiche (TC) aufweist, wobei jeder Zeitbereich (TC) durch Abtrennungen (SW) begrenzt ist, welche jeweils mit einer Mehrkernsynchronumschaltung, welche auf die Gruppe von Kernen des Mehrkernprozessors angewendet wird, korrespondieren,
wobei das Verfahren zum Installieren durch eine elektronische Installierungsvorrichtung (24) umgesetzt wird und den folgenden Schritt aufweist:
- das Ermitteln (100) eines Installationsplans der Softwareverarbeitungsvorgänge gemäß mindestens einer Regel von einer ersten Installationsregel und einer zweiten Installationsregel, wobei der Installationsplan, für jeden Softwareverarbeitungsvorgang, mindestens einen Kern und mindestens einen Zeitbereich (TC), welche dem Softwareverarbeitungsvorgang zugeordnet sind, definiert,
+ wobei die erste Installationsregel darin besteht, dass eine Liste von zulässigen Kombinationen von Kritikalitätsstufen für Anwendungen, welche dazu bestimmt sind, im Laufe eines selben Zeitbereichs auf der Plattform (16) ausgeführt zu werden, vorbestimmt wird,
+ wobei die zweite Installationsregel darin besteht, die Installation einer/von kritischen Softwareanwendung(en) auf einer oder mehreren Kernen von der Mehrzahl von Kernen des Mehrkernprozessors zu verbieten, wobei jede kritischen Softwareanwendung Kritikalitätsstufe hat, welche größer oder gleich einem vordefinierten Schwellenwert ist, wobei die Kritikalitätsstufe einer DAL-Stufe, welche gemäß der Norm DO-178B oder gemäß der Norm ARP4754 definiert ist, entspricht.

2. Verfahren gemäß dem Anspruch 1, wobei, für die erste Installationsregel, für eine Anwendung einer besagten Kritikalitätsstufe die Kombination anderer Anwendungen schlimmstenfalls von derselben Kritikalitätsstufe sein muss, wobei die Wahrscheinlichkeit, dass zwei Softwareanwendungen, welche eine gleiche besagte Kritikalitätsstufe haben, fehlerhaft sind, als im Wesentlichen gleich der Wahrscheinlichkeit, dass eine Softwareanwendung, welche eine Kritikalitätsstufe, die eine Einheit größer als die besagte Kritikalitätsstufe ist, hat, fehlerhaft ist, angesehen wird.

3. Verfahren gemäß dem Anspruch 1 und 2, wobei, für die zweite Installationsregel, jede kritische Softwareanwendung eine Kritikalitätsstufe hat, welches gleich der Stufe DAL A oder der Stufe DAL B ist,
wobei die Stufen DAL A und DAL B bevorzugterweise als die kritischsten angesehen werden.

4. Verfahren gemäß irgendeinem der vorhergehenden Ansprüche, wobei, bei dem Schritt des Ermittelns (100), der Installationsplan gemäß der ersten und der zweiten Installationsregel ermittelt wird.

5. Verfahren gemäß irgendeinem der vorhergehenden Ansprüche, wobei, bei dem Schritt des Ermittelns (100), der Installationsplan ferner gemäß einer dritten Installationsregel ermittelt wird, welche von einer Worst-Case-Ausführungszeit (WCET_i) des jeweiligen Softwareverarbeitungsvorgangs abhängig ist, wobei die Worst-Case-Ausführungszeit (WCET_i) um einen Zuschlag (Maj-i), welcher mit der Plattform (16) zusammenhängt, erhöht ist,
wobei, für die dritte Installationsregel, der Zuschlag (Maj-i) der Worst-Case-Ausführungszeit (WCET_i) bevorzugterweise von einer vordefinierten maximalen Konkurrenzrate, welche mit der Plattform (16) zusammenhängt, abhängt.

6. Verfahren gemäß irgendeinem der vorhergehenden Ansprüche, wobei, bei dem Schritt des Ermittelns (100), der Installationsplan ferner gemäß einer vierten Installationsregel ermittelt wird, welche darin besteht, dass eine zusätzliche Zeitspanne (Mrg-i) für jede kritische Softwareanwendung berücksichtigt wird,
wobei jede kritische Softwareanwendung bevorzugterweise eine Kritikalitätsstufe hat, welche gleich der Stufe DAL A oder der Stufe DAL B ist,
wobei die Stufen DAL A und DAL B bevorzugterweise außerdem als die kritischsten angesehen werden.

7. Verfahren gemäß irgendeinem der vorhergehenden Ansprüche, wobei das Verfahren ferner aufweist einen Schritt (110) des Testens des ermittelten Installationsplans, welcher nach dem Schritt des Ermittelns (100) durchgeführt wird, wobei der Schritt des Testens (110) ein gleichzeitiges Durchführen von einer oder mehreren Avionik-Software-Anwendungen (14) und von einer oder mehreren Testanwendungen aufweist,
wobei mindestens eine Testanwendung bevorzugterweise repräsentativ ist für Konkurrenzsituation(en) von einer Intensität, welche größer oder gleich einem vordefinierten Konkurrenz-Schwellenwert ist/sind.

8. Computerprogramm, welches Softwarebefehle aufweist, die bei deren Ausführung durch einen Computer ein Verfahren gemäß irgendeinem der vorhergehenden Ansprüche umsetzen.

9. Elektronische Vorrichtung (24) zur Installation von Avionik-Software-Anwendungen (14) auf einer Plattform (16), welche dazu bestimmt ist, an Bord eines Luftfahrzeugs befördert zu werden, wobei die Plattform (16) einen Mehrkernprozessor mit einer Mehrzahl von separaten Kernen aufweist, wobei jede Avionik-Software-Anwendung einen oder mehrere im Laufe einer vordefinierten Zeitperiode (MIF) auszuführende Softwareverarbeitungsvorgänge aufweist, wobei die vordefinierte Zeitperiode (MIF) einen oder mehrere aufeinanderfolgende Zeitbereiche (TC) aufweist, wobei jeder Zeitbereich (TC) durch Abtrennungen (SW) begrenzt ist, welche jeweils mit einer Mehrkernsynchronumschaltung, welche auf die Gruppe von Kernen des Mehrkernprozessors angewendet wird, korrespondieren,
wobei die Vorrichtung (24) aufweist ein Ermittlungsmodul (30), welches dazu eingerichtet ist, einen Installationsplan der Softwareverarbeitungsvorgänge gemäß mindestens einer Regel von einer ersten Installationsregel und einer zweiten Installationsregel zu ermitteln, wobei der Installationsplan, für jeden Softwareverarbeitungsvorgang, mindestens einen Kern und mindestens einen Zeitbereich (TC), welche dem Softwareverarbeitungsvorgang zugeordnet sind, definiert,
+ wobei die erste Installationsregel darin besteht, dass eine Liste von zulässigen Kombinationen von Kritikalitätsstufen für Anwendungen, welche dazu bestimmt sind, im Laufe eines selben Zeitbereichs auf der Plattform (16) ausgeführt zu werden, vorbestimmt wird,
+ wobei die zweite Installationsregel darin besteht, die Installation einer/von kritischen Softwareanwendung(en) auf einer oder mehreren Kernen von der Mehrzahl von Kernen des Mehrkernprozessors zu verbieten, wobei jede kritischen Softwareanwendung Kritikalitätsstufe hat, welche größer oder gleich einem vordefinierten Schwellenwert ist, wobei die Kritikalitätsstufe einer DAL-Stufe, welche gemäß der Norm DO-178B oder gemäß der Norm ARP4754 definiert ist, entspricht.

10. Elektronisches System (10), aufweisend:
- einen Speicher (12), welcher dazu eingerichtet, Softwareanwendungen (14) zu speichern,
- eine Plattform (16), welche dazu eingerichtet ist, jede Softwareanwendung (14) auszuführen, wobei die Plattform (16) einen Mehrkernprozessor mit einer Mehrzahl von separaten Kernen aufweist, und
- eine elektronische Vorrichtung (24) zur Installation von Avionik-Software-Anwendungen (14) auf der Plattform (16), wobei die elektronische Vorrichtung zur Installation (24) gemäß dem Anspruch 9 ist.

## Claims

1. A method for installing avionics software applications (14) on a platform (16) intended to be on board an aircraft, the platform (16) comprising a multi-core processor having a plurality of separate cores, each avionics software application (14) including one or several software processing operations to be executed over a predefined time period (MIF), the predefined time period (MIF) including one or several successive time clusters (TC), each time cluster (TC) being delimited by separations (SW) each corresponding to a multi-core synchronous switching performed on all the cores of the multi-core processor,
the installation method being implemented by an electronic installation device (24) and comprising the following step:
- determining (100) an installation plan for the software processing operations according to at least one rule from among a first installation rule and a second installation rule, the installation plan defining, for each software processing operation, at least one core and at least one time cluster (TC) that are associated with said software processing operation,
+ the first installation rule consisting of predetermining a list of authorized combinations of criticality levels for applications intended to be executed during a same time cluster on the platform (16),
+ the second installation rule consisting of prohibiting the installation of critical software application(s) on one or several cores of the plurality of cores of the multi-core processor, each critical software application having a criticality level greater than or equal to a predefined threshold, the criticality level corresponding to a DAL level defined according to standard DO-178 revision B, or according to standard ARP4754.

2. The method according to claim 1, wherein for the first installation rule, for an application of a given criticality level, the combination of other applications shall be at worst of the same criticality level, and the probability of two software applications having a same given criticality level being faulty is considered to be substantially equal to the probability of a software application having a criticality level one unit higher than said given criticality level being faulty.

3. The method according to claim 1 or 2, wherein, for the second installation rule, each critical software application has a criticality level equal to level DAL A or to level DAL B,
the levels DAL A and DAL B preferably being considered the most critical.

4. The method according to any one of the preceding claims, wherein, during the determining step (100), the installation plan is determined according to the first and second installation rules.

5. The method according to any one of the preceding claims, wherein, during the determining step (100), the installation plan is further determined according to a third installation rule depending on a worst-case execution time (WCET_i) of the respective software processing operation, said worst-case execution time (WCET_i) being increased by an increase (Maj-i) associated with the platform (16),
for the third installation rule, the increase (Maj-i) of the worst-case execution time (WCET_i) preferably depending on a predefined maximum contention rate, associated with the platform (16).

6. The method according to any one of the preceding claims, wherein, during the determining step (100), the installation plan is further determined according to a fourth installation rule consisting of taking into account an additional time margin (Mrg-i) for each critical software application,
each critical software application preferably having a criticality level equal to level DAL A or to level DAL B,
the levels DAL A and DAL B still preferably being considered the most critical.

7. The method according to any one of the preceding claims, wherein the method further comprises a step (110) for testing the determined installation plan, carried out after the determining step (100), the test step (110) including a simultaneous implementation of one or several avionics software applications (14) and one or several test applications,
at least one test application preferably being representative of contention(s) with an intensity greater than or equal to a predefined contention threshold.

8. A computer program comprising software instructions which, when executed by a computer, carry out a method according to any one of the preceding claims.

9. An electronic installation device (24) for installing avionics software applications (14) on a platform (16) intended to be on board an aircraft, the platform (16) comprising a multi-core processor having a plurality of separate cores, each avionics software application including one or several software processing operations to be executed over a predefined time period (MIF), the predefined time period (MIF) including one or several successive time clusters (TC), each time cluster (TC) being delimited by separations (SW) each corresponding to a multi-core synchronous switching performed on all the cores of the multi-core processor,
the device (24) comprising a determining module (30) configured to determine an installation plan for the software processing operations according to at least one rule from among a first installation rule and a second installation rule, the installation plan defining, for each software processing operation, at least one core and at least one time cluster (TC) that are associated with said software processing operation,
+ the first installation rule consisting of predetermining a list of authorized combinations of criticality levels for applications intended to be executed during a same time cluster on the platform (16),
+ the second installation rule consisting of prohibiting the installation of critical software application(s) on one or several cores of the plurality of cores of the multi-core processor, each critical software application having a criticality level greater than or equal to a predefined threshold, the criticality level corresponding to a DAL level defined according to standard DO-178 revision B, or according to standard ARP4754.

10. An electronic system (10), comprising:
- a memory (12) able to store avionics software applications (14);
- a platform (16) able to execute each software application (14), the platform (16) comprising a multi-core processor having a plurality of separate cores; and
- an electronic installation device (24) for installing avionics software applications (14) on the platform (16), the electronic installation device (24) being according to claim 9.
